# EUROPÄISCHE PATENTSCHRIFT

(11) **EP 1 227 950 B1**
(45) Veröffentlichungstag und Bekanntmachung des Hinweises auf die Patenterteilung: **05.12.2007**
(21) Anmeldenummer: 01971915.2
(22) Anmeldetag: 16.08.2001
(51) Int. Cl.: B60N 2/08

(54) **SITZLÄNGSVERSTELLUNG**
LONGITUDINAL ADJUSTMENT SYSTEM FOR SEATS
SYSTEME DE REGLAGE LONGITUDINAL DE SIEGE

(30) Priorität: 13.10.2000 DE 10050957
(43) Veröffentlichungstag der Anmeldung: 07.08.2002
(73) Patentinhaber: KEIPER GmbH & Co. KG, 67657 Kaiserslautern (DE)
(72) Erfinder: FLICK, Joachim, 42499 Hückeswagen (DE)
(74) Vertreter: Patentanwälte Hosenthien-Held und Dr. Held
(86) Internationale Anmeldenummer: PCT/EP2001/009416
(87) Internationale Veröffentlichungsnummer: WO 2002/030702

(56) Entgegenhaltungen:
- EP-A- 0 945 301
- JP-A- 10 329 594
- US-A- 5 806 825
- US-A- 5 931 436
- US-A- 6 113 051

## Beschreibung

Die Erfindung betrifft eine Sitzlängsverstellung, insbesondere für Kraftfahrzeugsitze, mit den Merkmalen des Oberbegriffs des Anspruches 1.

Derartige Sitzlängsverstellungen sind in ähnlicher Form in der nicht vorveröffentlichten DE 100 41 605 C1 beschrieben.

Die EP 0 945 301 A1 zeigt eine Sitzlängsverstellung mit einer Unterschiene, einer Oberschiene und einem federbelasteten Verriegelungsteil, welches mit zahnartigen Vorsprüngen durch schlitzartige Öffnungen der Oberschiene und zahnartige Durchbrüche der Unterschiene greift. Das Verriegelungsteil ist einseitig eingespannt und damit quasi um eine horizontale Achse schwenkbar als einzigem Freiheitsgrad. Bei der Schwenkbewegung können die zahnartigen Vorsprünge bei Eintritt in die horizontale angeordneten, zahnartigen Durchbrüche durch die sich in horizontaler Richtung verkürzenden Abstände in Anlage an die Randbereiche der zahnartigen Durchbrüche und schlitzartigen Öffnungen der Schienen kommen und so spielfrei stellen.

Die JP 10-329594 A offenbart eine Sitzlängsverstellung mit einer Unterschiene, einer Oberschiene und einem Verriegelungsteil, welches an der Oberschiene um eine horizontale Achse schwenkbar gelagert ist als einzigem Freiheitsgrad. Der Verriegelungsteil ist mit einem Endbereich, welcher einen breiteren Steg, zwei schmälere Stege und zwei Öffnungen dazwischen aufweist, innerhalb einer größeren Aussparung der Oberschiene angeordnet und greift mit den Stegen in zahnartige Durchbrüche der Unterschiene.

Von Nachteil ist bei bekannten Ausführungsformen, dass Oberschiene und Unterschiene wegen ihrer Beweglichkeit zueinander in der Verriegelungsstellung nicht genau spielfrei gehaltert sind. Sie können je nach Belastung leicht hin- und herbewegt werden. Hierbei wird trotz der relativ kleinen Bewegungsstrecke durch den dauernden Gebrauch und durch die dauernde Belastung seitens eines Benutzers eines Sitzes das Spiel zwischen den Schienen durch Verschleiß immer größer.

Aufgabe der Erfindung ist es daher, die Sitzlängsverstellung der eingangs genannten Art so zu gestalten, dass die beiden Schienen, Unterschiene und Oberschiene, in der Verriegelungsstellung genau zueinander angeordnet sind, ohne dass ein Verschieben möglich ist. Darüber hinaus soll die spielfreie Halterung mit möglichst wenigen Bauteilen erreicht werden.

Diese Aufgabe wird erfindungsgemäß durch eine Sitzlängsverstellung mit den Merkmalen des Anspruche 1 gelöst. Vorteilhafte Ausgestaltungen sind Gegenstand der Unteransprüche.

Die Vertikalbewegung und die Winkelbewegung des Verriegelungsteils ergeben zwei Freiheitsgrade, von denen einer zur spielfreien Festlegung von Oberschiene und Unterschiene genutzt wird. Die veränderbare Lage des Verriegelungsteils bezüglich der Schienen, beispielsweise eine Kippung und/oder Drehung, erlaubt zwei zahnartigen Vorsprüngen, jeweils eine Schiene zu kontaktieren, d.h. die Randbereiche eines zahnartigen Durchbruchs der Unterschiene und einer schlitzartigen Öffnung der Oberschiene zu berühren. In dieser Verriegelungsstellung ist keine Verschiebbarkeit mehr gegeben. Vorzugsweise weist ein erster zahnartiger Vorsprung eine größere Breite als der letzte zahnartige Vorsprung auf, und eine vom ersten zahnartigen Vorsprung entfernt liegende schlitzartige Öffnung ist an ihrem oberen Ende keilförmig ausgebildet.

Bei einem besonderen Ausführungsbeispiel der Erfindung sind die Öffnungen und die Durchbrüche derart keilförmig ausgebildet, dass bei Eingriff der zahnartigen Vorsprünge die Feder unter Drehung des Verbindungsteils die Randbereiche in eine spielfreie Halterung zwischen den beiden Schienen festlegt.

Auf der Zeichnung ist der Erfindungsgegenstand in einem Ausführungsbeispiel dargestellt und zwar zeigen:
- Fig.1: in perspektivischer Darstellung ein Schienen-Paar,
- Fig. 2: einen Schnitt durch das Schienen-Paar,
- Fig. 3a,b+c: die auseinandergezogene Darstellung von Unterschiene, Oberschiene und Verriegelungsteil,
- Fig. 4: die drei Teile in Eingriff zueinander.

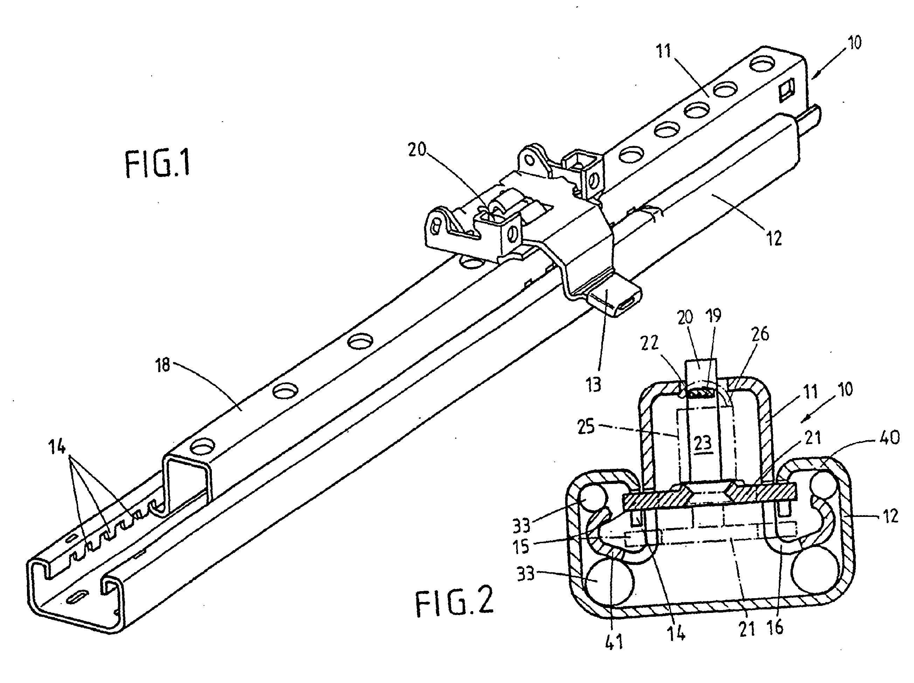

Die erfindungsgemäße Sitzlängsverstellung besteht aus zwei im Abstand angeordneten Schienen-Paaren 10, die jeweils aus einer Oberschiene 11 und einer Unterschiene 12 bestehen. Ein Schienen-Paar 10 ist in Fig. 1 gezeigt.

Die Oberschiene 11 ist über Kugeln 33 in der Unterschiene 12 verschiebbar. Die Unterschiene 12 ist am Boden eines Fahrzeuges befestigbar, während die Oberschiene 11 einem Sitzgestell zugeordnet wird. Das Profil von Ober und Unterschiene 11 und 12 ist U-förmig, wobei das freie Ende der Schenkel jeweils seinerseits nochmals abgebogen und verformt ist, derart, dass die Oberschiene 11 eine zweite Abbiegung in Form eines U-förmigen Abschnittes 41 nach außen und nach oben hin offen aufweist, während die Unterschiene 12 eine zweite U-förmige Abbiegung in Form eines U-förmigen Abschnittes 40 nach innen und unten zeigt. Diese beiden Abschnitte 40, 41 greifen ineinander, wie beispielsweise aus Fig. 2 zu erkennen ist. Um die Bewegung der beiden Schienen 11,12 zueinander zu sperren und damit eine Sitzverschiebung zu verhindern, ist die Unterschiene 12 mit zahnartigen Durchbrüchen 14 versehen. In diese zahnartigen Durchbrüche 14 greifen zahnartige Vorsprünge 15, 15' eines Verriegelungsteils 21. Das Verriegelungsteil 21 ist in der Oberschiene 11 gehaltert.

Zur Bewegungssperrung von Oberschiene 11 in Unterschiene 12 liegen die zahnartigen Vorsprünge 15, 15' in den zahnartigen Durchbrüchen 14. Zugleich greifen die zahnartigen Vorsprünge 15, 15' in schlitzartige Öffnungen 16, 16' der Oberschiene 11. Die zahnartigen Vorsprünge 15, 15' liegen zunächst nicht in den zahnartigen Durchbrüchen 14 der Unterschiene 12. Erst wenn ein Führungsstift 23 des Verriegelungsteils 21 durch ein Betätigungsglied 13 freigegeben wird, wird durch die Kraft einer Rückstellfeder 25 das Verriegelungsteil 21 mit seinen zahnartigen Vorsprüngen 15, 15' in die zahnartigen Durchbrüche 14 der Unterschiene 12 gezogen. Diese zahnartigen Durchbrüche 14 sind kontinuierlich entlang der Unterschiene 12 angeordnet.

In der Sperrstellung ragt das obere, freie Ende 20 des Führungsstiftes 23 durch eine Öffnung 22 aus dem Mittelsteg 18 der Oberschiene 11 heraus. In der Freigabestellung, also in der Stellung, in der die Oberschiene 11 in der Unterschiene 12 verschiebbar ist und somit der Sitz gegenüber dem Boden bewegt werden kann, wird der Führungsstift 23 bereichsweise ins Innere der Unterschiene 12 bewegt.

Hierdurch gelangt das Verriegelungsteil 21 mit seinen zahnartigen Vorsprüngen 15, 15' außer Eingriff mit den zahnartigen Durchbrüchen 14 der Unterschiene 12.

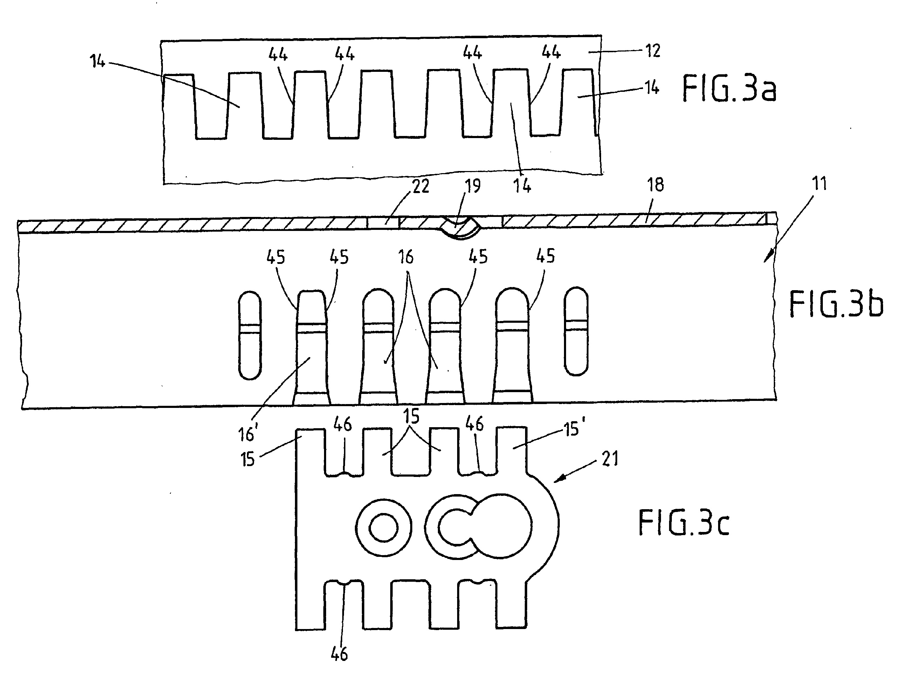

Bei dem dargestellten Ausführungsbeispiel ist eine einzige Verriegelungsplatte als Verriegelungsteil 21 vorgesehen, die an zwei gegenüberliegenden Seiten die zahnartigen Vorsprünge 15, 15' trägt, vergl. beispielsweise Fig. 3c. Die Breite der zahnartigen Durchbrüche 14 ist jedoch so groß gestaltet, dass die Randbereiche von den zahnartigen Vorsprüngen 15, 15' des Verriegelungsteils 21 berührt werden können. Hierzu sind die zahnartigen Durchbrüche 14 keilförmig gestaltet.

Es sei hier vorgetragen, dass die Oberschiene 11 eine nasenförmige Abbiegung 19 trägt. In diese nasenförmige Abbiegung 19 wird ein hakenförmiges Federende 26 der Rückstellfeder 25 eingehängt. Das zweite Ende der Rückstellfeder 25 ist in dem Verriegelungsteil 21 festgelegt. Hierdurch wird das Verriegelungsteil 21 immer gegen die Oberschiene 11 gezogen, soweit dies nicht durch Zahnstege zwischen den zahnartigen Durchbrüchen 14 der Unterschiene 12 verhindert wird. In Fig. 2 ist das Verriegelungsteil 21 strichpunktiert in seiner Freigabestellung gezeichnet, d.h. die zahnartigen Vorsprünge 15, 15' greifen nicht mehr in die zahnartigen Durchbrüche 14. Der Führungsstift 23 ragt mit seinem freien Ende 20 aus der Oberschiene 11 heraus.

In der ausgezogenen Stellung, der Verriegelungsstellung selber, ragt der Führungsstift 23 mit seinem freien Ende 20 aus der Oberschiene 11 heraus und die zahnartigen Vorsprünge 15, 15' des Verriegelungsteils 21 liegen in den zahnartigen Durchbrüchen 14. In der Fig. 3 sind nun Oberschiene 11, Unterschiene 12 und Verriegelungsteil 21 in größerem Maßstab dargestellt. Die Unterschiene 12 ist lediglich mit den zahnartigen Durchbrüchen 14 dargestellt, die leicht keilförmig gestaltet sind. Von der Oberschiene 11, vergl. Fig. 3b, ist der Mittelsteg 18 dargestellt. Dieser weist die nasenförmige Abbiegung 19 sowie eine Öffnung 22 auf, durch die der Führungsstift 23 hindurchragt, wobei ein Betätigungsglied 13 (Fig. 1) diesen Führungsstift 23 so weit zurückbewegen kann, dass das Verriegelungsteil 21 außer Eingriff mit den zahnartigen Durchbrüchen 14 kommt.

Fig. 3a zeigt, dass die zahnartigen Durchbrüche 14 der Unterschiene 12 konisch sind. Die zahnartigen Durchbrüche 14 weisen entlang der Unterschiene 12 immer die gleiche Größe und den gleichen Abstand auf.

Die Oberschiene 11 trägt die schlitzartigen Öffnungen 16, 16' (Fig. 3b). Hierbei ist die schlitzartige Öffnung 16' an ihrem oberen Ende verjüngt zusammenlaufend.

Die Einführungsöffnung für die zahnartigen Vorsprünge 15, 15' sind wie aus Fig. 3b ersichtlich keilförmig erweitert.

Der erste zahnartige Vorsprung 15' ist mit einer größeren Breite versehen als die übrigen zahnartigen Vorsprünge 15.

Wie aus Fig. 3c noch weiter hervorgeht, sind zwischen zwei zahnartigen Vorsprüngen 15 noppenartige Verdickungen 46 vorgesehen.

In Fig. 3c ist eine Halterung für die Rückstellfeder 25 gezeigt, sowie die Halterung für den Führungsstift. Wie aus dieser Fig. ersichtlich, kann das Verriegelungsteil 21 eine Drehbewegung um die noppenartigen Verdickungen 46 oder aber in der schlitzartigen Öffnung 16' ausführen, so dass der erste zahnartige Vorsprung 15' in Berührungskontakt mit den Randbereichen 44 des zahnartigen Durchbruches 14 kommen kann.

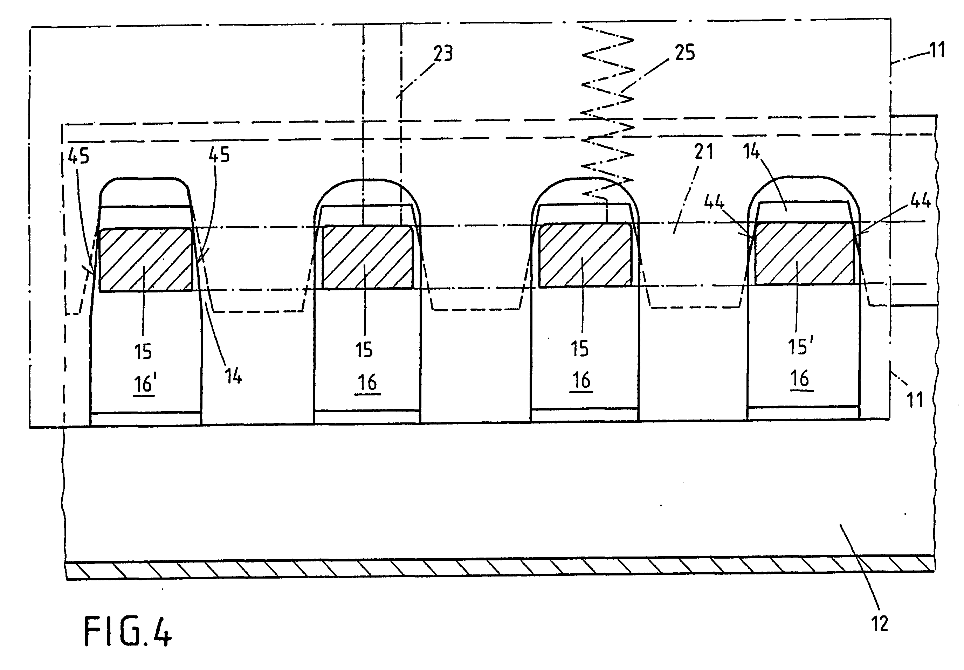

In Fig. 4 ist nunmehr der Eingriff des Verriegelungsteils 21 mit den zahnartigen Vorsprüngen 15, 15' dargestellt.

Das Verriegelungsteil 21 wird einerseits durch den Führungsstift 23 in seiner Bewegung in der Öffnung 22 geleitet, hier allerdings ist ein gewisses Spiel vorhanden, um so bei Bewegungen des Verriegelungsteils 21 selber einen Ausgleich zu haben. Darüber hinaus greift die Rückstellfeder 25 an das Verriegelungsteil 21 und zieht dieses in den schlitzartigen Öffnungen 16, 16' nach oben. Hierbei stößt der etwas breitere erste zahnartige Vorsprung 15' gegen Randbereiche 44 des zahnartigen Durchbruchs 14 bzw. in den Randbereich 45 der schlitzartigen Öffnung 16 und legt somit in einer Richtung das Verriegelungsteil 21 an der Unterschiene 12 fest. Zugleich führt das Verriegelungsteil 21 eine Kippbewegung aus, da die Eindringtiefe in der keilförmigen, schlitzartigen Öffnung 16' anders ist als beim ersten zahnartigen Vorsprung 15' im zahnartigen Durchbruch 14.

Die Oberschiene 11 ist nunmehr an dem Verriegelungsteil 21 festgelegt, so dass die beiden Schienen 11, 12 nicht gegeneinander bewegt werden können. Es sei hier noch erwähnt, dass auch die untere Reihe (Fig. 3c) der zahnartigen Vorsprünge 15, 15' mit den entsprechenden Randbereichen 44, 45 der schlitzartigen Öffnungen 16, 16' bzw. zahnartigen Durchbrüche 14 in Kontakt kommt. Wie zu erkennen ist, ist die schlitzartige Öffnung 16' an ihrem oberen Ende keilförmig ausgebildet, um so eine sichere und feste Halterung des zahnartigen Vorsprunges 15 zu erzielen.

Durch die Drehung des Verriegelungsteils 21 und/oder durch die Kippung stellen sich die zahnartigen Vorsprünge 15, 15' auf beiden Seiten des Verriegelungsteils 21 zu den zahnartigen Durchbrüchen 14 und den schlitzartigen Öffnungen 16, 16' ein, so dass eine spielfreie Lagerung gegeben ist.

Wie bereits erwähnt, sind die dargestellten Ausführungsformen nur beispielsweise Verwirklichungen der Erfindung. Diese ist nicht darauf beschränkt. Vielmehr sind noch mancherlei Abänderungen und Anwendungen möglich. Wichtig ist, dass die zahnartigen Vorsprünge 15 durch eine Kipp- oder Drehbewegung an den keilförmigen schlitzartigen Öffnungen 16' beidseitig angreifen können, umgekehrt, dass der breitere erste zahnartige Vorsprung 15' an beiden Seiten die Randbereiche 44 berührt. Durch den Toleranzausgleich in Folge der noppenartigen Verdickung 46 und/oder der Kippbewegung ist dieses ohne weiteres möglich. Es sei hier weiter vorgetragen, dass bei Belastung auch die übrigen zahnartigen Vorsprünge 15, 15' des Verriegelungsteils 21 mit Randbereichen der zahnartigen Durchbrüche 14 bzw. der schlitzartigen Öffnungen 16, 16' in Kontakt gelangen können.

### Bezugszeichenliste:

- 10: Schienen-Paar
- 11: Oberschiene
- 12: Unterschiene
- 13: Betätigungsglied
- 14: zahnartiger Durchbruch
- 15: zahnartiger Vorsprung von 21
- 15': erster zahnartiger Vorsprung von 21
- 16: schlitzartige Öffnung in 11
- 16': keilförmige schlitzartige Öffnung in 11
- 18: Mittelsteg von 11
- 19: nasenförmige Abbiegeung in 18
- 20: freies Ende von 23
- 21: Verriegelungsteil
- 22: Öffnung in 18
- 23: Führungsstift
- 25: Rückstellfeder
- 26: hakenförmiges Federende
- 33: Kugel
- 40: U-förmiger Abschnitt an 11
- 41: U-förmiger Abschnitt an 12
- 44: Randbereich von 14
- 45: Randbereich von 16'
- 46: noppenartige Verdickung

## Patentansprüche

1. Sitzlängsverstellung, insbesondere für Kraftfahrzeugsitze,
a) mit zwei im Abstand voneinander angeordneten Schienen-Paaren (10), die jeweils aus zwei Schienen, einer Oberschiene (11) und einer Unterschiene (12) aufgebaut sind, wobei
b) die dem Sitz zugeordnete Oberschiene (11) mit schlitzartigen Öffnungen (16, 16') versehen ist und
c) die dem Boden eines Fahrzeugs zugeordnete Unterschiene (12) zahnartige Durchbrüche (14) aufweist, und mit
d) wenigstens einem federbelasteten, bewegbaren, plattenförmigen Verriegelungsteil (21), das an der Oberschiene (11) gehaltert ist, das in einer Verriegelungsstellung eine Bewegung der Oberschiene (11) in der Unterschiene (12) sperrt, und das an seinen beiden gegenüberliegenden Längsseiten zahnartige Vorsprünge (15, 15') trägt, die von einer Freigabestellung in die Verriegelungsstellung durch eine Feder (25) sowohl in die schlitzartigen Öffnungen (16, 16') als auch in die zahnartigen Durchbrüche (14) bewegbar sind, wobei das Verriegelungsteil (21) die Oberschiene (11) und Unterschiene (12) in der Verriegelungsstellung festlegt, indem zahnartige Vorsprünge (15, 15') Randbereiche (44, 45) der zahnartigen Durchbrüche (14) und/oder der schlitzartigen Öffnungen (16, 16') berühren,
**dadurch gekennzeichnet, dass**
e) das Verriegelungsteil (21) die Oberschiene (11) und Unterschiene (12) in der Verriegelungsstellung spielfrei festlegt durch eine Vertikalbewegung, bei welcher ein erster zahnartiger Vorsprung (15') den Randbereich (44) eines zahnartigen Durchbruchs (14) berührt und somit das Verriegelungsteil (21) in einer Richtung an der Unterschiene (12) festlegt, und durch eine Winkelbewegung, bei welcher ein anderer zahnartiger Vorsprung (15) den Randbereich (45) einer schlitzartigen Öffnung (16') berührt und dabei die Eindringtiefe anders ist als beim ersten zahnartigen Vorsprung (15') im zahnartigen Durchbruch (14).

2. Sitzlängsverstellung nach Anspruch 1, **dadurch gekennzeichnet, dass** in der Verriegelungsstellung der erste zahnartige Vorsprung (15') an beiden Seiten den Randbereich (44) eines zahnartigen Durchbruchs (14) berührt und der andere zahnartiger Vorsprung (15) beidseitig den Randbereich (45) der schlitzartigen Öffnung (16') berührt.

3. Sitzlängsverstellung nach Anspruch 2, **dadurch gekennzeichnet, dass** der erste zahnartige Vorsprung (15') eine größere Breite als der letzte zahnartige Vorsprung (15) aufweist und die beidseitig an ihrem Randbereich (45) berührte, vom ersten zahnartigen Vorsprung (15') entfernt liegende, schlitzartige Öffnung (16') an ihrem oberen Ende keilförmig ausgebildet ist.

4. Sitzlängsverstellung nach Anspruch 3, **dadurch gekennzeichnet, dass** die keilförmige, schlitzartige Öffnung (16') und die zahnartigen Durchbrüche (14) derart keilförmig ausgebildet sind, dass bei Eingriff der zahnartigen Vorsprünge (15, 15') des Verriegelungsteils (21) die Feder (25) unter Drehung und Anziehung des Verriegelungsteils (21) die beiden Schienen (11,12) in eine spielfreie Halterung überführt.

5. Sitzlängsverstellung nach Anspruch 3 oder 4, **dadurch gekennzeichnet, dass** die vom ersten zahnartigen Vorsprung (15') entfernt liegende, keilförmige, schlitzartige Öffnung (16') vom letzten zahnartigen Vorsprung (15) kontaktiert wird.

6. Sitzlängsverstellung nach einem der vorhergehenden Ansprüche, **dadurch gekennzeichnet, dass** das Verriegelungsteil (21) mittels eines Führungsstiftes (23) in seiner Bewegung in einer Öffnung (22) der Oberschiene (11) mit Spiel geleitet wird, und die Feder (25) das Verriegelungsteil (21) in den schlitzartigen Öffnungen (16, 16') nach oben zieht.

7. Sitzlängsverstellung nach einem der vorhergehenden Ansprüche, **dadurch gekennzeichnet, dass** das in der Oberschiene (11) gehalterte Verriegelungsteil (21) kipp- und/oder drehbar gelagert ist.

8. Sitzlängsverstellung nach Anspruch 6 und 7, **dadurch gekennzeichnet, dass** zur Halterung des Verriegelungsteils (21) in der Oberschiene (11) der Führungsstift (23) des Verriegelungsteils (21) durch die Öffnung (22) der Oberschiene (11) ragt.

9. Sitzlängsverstellung nach einem der vorhergehenden Ansprüche, **dadurch gekennzeichnet, dass** die Feder (25) mit einem Ende in der Oberschiene (11) eingehängt und mit dem zweiten Ende im Verriegelungsteil (21) festgelegt ist.

10. Sitzlängsverstellung nach einem der vorhergehenden Ansprüche, **dadurch gekennzeichnet, dass** durch eine Drehung des Verriegelungsteils (21) und/oder eine Kippung sich die zahnartigen Vorsprünge (15, 15') auf beiden Seiten des Verriegelungsteils (21) zu den zahnartigen Durchbrüchen (14) und den schlitzartigen Öffnungen (16, 16') einstellen, so dass eine spielfreie Lagerung gegeben ist.

## Claims

1. Longitudinal adjustment system for seats, in particular for motor vehicle seats,
a) having two rail pairs (10) which are arranged with mutual spacing and which are each constructed from two rails, an upper rail (11) and a lower rail (12),
b) the upper rail (11) which is associated with the seat being provided with slot-like openings (16, 16') and
c) the lower rail (12) which is associated with the floor of a vehicle having tooth-like indentations (14), and having
d) at least one resiliently loaded, movable, plate-like locking member (21) which is retained on the upper rail (11) and which, in a locking position, blocks a movement of the upper rail (11) in the lower rail (12), and which carries, at both opposing longitudinal sides thereof, tooth-like projections (15, 15') which can be moved from a release position into the locking position by means of a spring (25) both into the slot-like openings (16, 16') and into the tooth-like indentations (14), the locking member (21) securing the upper rail (11) and the lower rail (12) in the locking position, by tooth-like projections (15, 15') coming into contact with edge regions (44, 45) of the tooth-like indentations (14) and/or the slot-like openings (16, 16'),
**characterised in that**
e) the locking member (21) secures the upper rail (11) and lower rail (12) in the locking position in a play-free manner by means of a vertical movement, during which a first tooth-like projection (15') comes into contact with the edge region (44) of a tooth-like indentation (14) and consequently secures the locking member (21) in one direction to the lower rail (12), and by means of an angular movement, during which another tooth-like projection (15) comes into contact with the edge region (45) of a slot-like opening (16') and the penetration depth is different to that of the first tooth-like projection (15') in the tooth-like indentation (14).

2. Longitudinal adjustment system for seats according to claim 1, **characterised in that**, in the locking position, the first tooth-like projection (15') comes into contact with the edge region (44) of a tooth-like indentation (14) at both sides and the other tooth-like projection (15) comes into contact with the edge region (45) of the slot-like opening (16') at both sides.

3. Longitudinal adjustment system for seats according to claim 2, **characterised in that** the first tooth-like projection (15') has a larger width than the last tooth-like projection (15) and the slot-like opening (16') which is in contact at both sides at the edge region (45) thereof and which is remote from the first tooth-like projection (15') is constructed in a wedge-shaped manner at the upper end thereof.

4. Longitudinal adjustment system for seats according to claim 3, **characterised in that** the wedge-shaped, slot-like opening (16') and the tooth-like indentations (14) are constructed in such a wedge-like manner that, when the tooth-like projections (15, 15') of the locking member (21) engage, the spring (25) urges the two rails (11, 12) into a play-free retaining member, with the locking member (21) being rotated and pulled.

5. Longitudinal adjustment system for seats according to claim 3 or 4, **characterised in that** the wedge-shaped, slot-like opening (16') that is remote from the first tooth-like projection (15') is in contact with the last tooth-like projection (15).

6. Longitudinal adjustment system for seats according to any one of the preceding claims, **characterised in that** the locking member (21) is directed with play during its movement in an opening (22) of the upper rail (11) by means of a guiding pin (23) and the spring (25) pulls the locking member (21) upwards in the slot-like openings (16, 16').

7. Longitudinal adjustment system for seats according to any one of the preceding claims, **characterised in that** the locking member (21) which is retained in the upper rail (11) is supported so as to be able to be tilted and/or rotated.

8. Longitudinal adjustment system for seats according to claim 6 and 7, **characterised in that**, in order to retain the locking member (21) in the upper rail (11), the guiding pin (23) of the locking member (21) protrudes through the opening (22) of the upper rail (11).

9. Longitudinal adjustment system for seats according to any one of the preceding claims, **characterised in that** the spring (25) is suspended with one end in the upper rail (11) and is secured in the locking member (21) with the second end.

10. Longitudinal adjustment system for seats according to any one of the preceding claims, **characterised in that**, by means of a rotation of the locking member (21) and/or a tilting action, the tooth-like projections (15, 15') at both sides of the locking member (21) adjust in relation to the tooth-like indentations (14) and the slot-like openings (16, 16') so that play-free support is provided.

## Revendications

1. - Dispositif de réglage en longueur pour sièges, en particulier pour des sièges de véhicules automobiles,
(a) comportant deux paires de rails (10) écartées l'une de l'autre, qui sont chacune constituées par au moins deux rails, un rail supérieur (11) et un rail inférieur (12) ;
(b)le rail supérieur (11) associé au siège comportant des ouvertures en forme de fente (16, 16') et
(c) le rail inférieur (12) associé au plancher d'un véhicule présentant des passages en forme de dent (14) ; et comportant
(d)au moins un élément de verrouillage (21) sollicité par ressort, mobile, en forme de plaque, qui est fixé au rail supérieur (11), qui bloque dans une position de verrouillage un déplacement du rail supérieur (11) dans le rail inférieur (12), et qui porte sur ses deux côtés longitudinaux opposés des saillies en forme de dent (15, 15'), qui sont mobiles depuis une position de déverrouillage jusque dans la position de verrouillage par l'intermédiaire d'un ressort (25) aussi bien dans les ouvertures en forme de fente (16, 16') que dans les passages en forme de dent (14), l'élément de verrouillage (21) fixant le rail supérieur (11) et le rail inférieur (12) dans la position de verrouillage, en ce que les saillies en forme de dent (15, 15') sont en contact avec des zones de bord (44, 45) des passages en forme de dent (14) et/ou des ouvertures en forme de fente (16, 16'),
**caractérisé par le fait que**
(e)l'élément de verrouillage (21) fixe sans jeu le rail supérieur (11) et le rail inférieur (12) dans la position de verrouillage grâce à un déplacement vertical, lors duquel une première saillie en forme de dent (15') est en contact avec la zone de bord (44) d'un passage en forme de dent (14) et fixe ainsi l'élément de verrouillage (21) dans un sens sur le rail inférieur (12), et par un déplacement angulaire, lors duquel une autre saillie en forme de dent (15) est en contact avec la zone de bord (45) d'une ouverture en forme de fente (16') et dès lors l'enfoncement est différent de celui de la première saillie en forme de dent (15') dans le passage en forme de dent (14).

2. - Dispositif de réglage en longueur pour sièges, selon la revendication 1, **caractérisé par le fait que**, dans la position de verrouillage, la première saillie en forme de dent (15') est en contact sur les deux côtés avec la zone de bord (44) d'un passage en forme de dent (14) et l'autre saillie en forme de dent (15) est en contact des deux côtés avec la zone de bord (45) de l'ouverture en forme de fente (16').

3. - Dispositif de réglage en longueur pour sièges, selon la revendication 2, **caractérisé par le fait que** la première saillie en forme de dent (15') présente une largeur plus importante que la dernière saillie en forme de dent (15) et l'ouverture en forme de fente (16') en contact des deux côtés avec sa zone de bord (45), éloignée de la première saillie en forme de dent (15') a la forme d'un coin au niveau de son extrémité supérieure.

4. - Dispositif de réglage en longueur pour sièges, selon la revendication 3, **caractérisé par le fait que** l'ouverture en forme de coin et de fente (16') et les passages en forme de dent (14) ont des formes de coin de telle sorte que, lors de l'engagement des saillies en forme de dent (15, 15') de l'élément de verrouillage (21), le ressort (25) fixe les deux rails (11, 12) sans jeu lors de la rotation et du mouvement de l'élément de verrouillage (21).

5. - Dispositif de réglage en longueur pour sièges, selon l'une des revendications 3 ou 4, **caractérisé par le fait que** l'ouverture éloignée de la première saillie en forme de dent (15'), en forme de coin et de fente (16') est en contact avec la dernière saillie en forme de dent (15).

6. - Dispositif de réglage en longueur pour sièges, selon l'une des revendications précédentes, **caractérisé par le fait que** l'élément de verrouillage (21) est dirigé avec du jeu au moyen d'une tige de guidage (23) dans son déplacement dans une ouverture (22) du rail supérieur (11), et le ressort (25) tire l'élément de verrouillage (21) dans les ouvertures en forme de fente (16, 16') vers le haut.

7. - Dispositif de réglage en longueur pour sièges, selon l'une des revendications précédentes, **caractérisé par le fait que** l'élément de verrouillage (21) fixé dans le rail supérieur (11) est monté de manière basculante et/ou pivotante.

8. - Dispositif de réglage en longueur pour sièges, selon les revendications 6 et 7, **caractérisé par le fait que**, pour fixer l'élément de verrouillage (21) dans le rail supérieur (11), la tige de guidage (23) de l'élément de verrouillage (21) dépasse de l'ouverture (22) du rail supérieur (11).

9. - Dispositif de réglage en longueur pour sièges, selon l'une des revendications précédentes, **caractérisé par le fait que** le ressort (25) est suspendu par une extrémité dans le rail supérieur (11) et est fixé par une deuxième extrémité dans l'élément de verrouillage (21).

10. - Dispositif de réglage en longueur pour sièges, selon l'une des revendications précédentes, **caractérisé par le fait que**, par une rotation de l'élément de verrouillage (21) et/ou un basculement, les saillies en forme de dent (15, 15') se règlent des deux côtés de l'élément de verrouillage (21) sur les passages en forme de dent (14) et les ouvertures en forme de fente (16, 16'), de telle sorte qu'un montage sans jeu est obtenu.
